# FASCICULE DE BREVET EUROPEEN

(11) **EP 2 704 303 B1**
(45) Date de publication et mention de la délivrance du brevet: **24.07.2019**
(21) Numéro de dépôt: 13182185.2
(22) Date de dépôt: 29.08.2013
(51) Int. Cl.: H02M 5/257

(54) **Circuit de charge d'un condensateur pour variateur de puissance**
Kondensatorladeschaltung fuer Phasenanschnittsteuerung
Charging circuit of a capacitor for phase-fired controller

(30) Priorité: 29.08.2012 FR 1258072
(43) Date de publication de la demande: 05.03.2014
(73) Titulaire: STMicroelectronics (Tours) SAS, 37100 Tours (FR)
(72) Inventeur: Gonthier, Laurent, 37000 TOURS (FR); Passal, Antoine, 37380 MONNAIE (FR)
(74) Mandataire: Cabinet Beaumont

(56) Documents cités:
- DE-A1-102004 026 896
- DE-A1-102010 018 588
- US-A- 3 872 374
- US-A- 4 031 458
- US-A- 4 353 025
- US-A- 4 680 536
- US-A1- 2010 141 231
- US-B1- 6 222 356

## Description

### Domaine de l'invention

La présente invention concerne de façon générale les circuits électroniques, et vise plus particulièrement le domaine des circuits de charge d'un condensateur par une tension alternative. L'invention trouve un intérêt tout particulier dans le domaine des variateurs de puissance destinés à commander une charge alimentée à partir d'une tension alternative.

### Exposé de l'art antérieur

Parmi les variateurs de puissance connus, certains comprennent un interrupteur de type thyristor ou triac, en série avec la charge, le tout recevant une tension alternative d'alimentation, et un circuit de commande de l'interrupteur. En fonctionnement, l'interrupteur est rendu passant (fermé) à un stade intermédiaire entre le début et la fin de chaque alternance positive et/ou négative de la tension d'alimentation, par application d'un signal de déclenchement sur sa gâchette. Une fois déclenché, l'interrupteur reste passant jusqu'à la fin de l'alternance. En jouant sur l'instant d'application du signal de déclenchement, il est possible de réguler la puissance fournie à la charge.

Le circuit de commande de l'interrupteur comprend généralement un condensateur chargé par la tension alternative, et un circuit de déclenchement adapté à fermer l'interrupteur lorsque la tension aux bornes du condensateur dépasse un seuil. Un potentiomètre permet à l'utilisateur de contrôler la vitesse de charge du condensateur, et donc l'instant de déclenchement de l'interrupteur.

Un inconvénient des variateurs de puissance existants est que, pour un réglage donné du potentiomètre, en cas de fluctuations parasites de l'amplitude de la tension alternative d'alimentation, la vitesse de charge du condensateur varie, et par conséquent la puissance fournie à la charge varie aussi. Dans le cas où la charge est un dispositif d'éclairage lumineux, cela peut se traduire par des variations visibles d'intensité lumineuse.

Il serait souhaitable de pouvoir diminuer l'influence des fluctuations d'amplitude de la tension alternative d'alimentation sur la puissance fournie à la charge.

Plus généralement, il serait souhaitable de pouvoir diminuer l'influence des fluctuations d'amplitude d'une tension alternative sur le temps de charge d'un condensateur.

### Résumé

Ainsi, un objet d'un mode de réalisation de la présente invention est de prévoir un circuit de charge d'un condensateur par une tension alternative, palliant tout ou partie des inconvénients des circuits de charge existants.

Un autre objet d'un mode de réalisation de la présente invention est de prévoir un variateur de puissance pour une charge alimentée à partir d'une tension alternative, ce variateur palliant tout ou partie des inconvénients des variateurs existants.

Ainsi, un mode de réalisation de la présente invention prévoit un circuit de charge d'un condensateur par une tension alternative, comportant un circuit d'ajustement de la vitesse de charge du condensateur en fonction de la valeur de la tension alternative.

Selon un mode de réalisation de la présente invention, le circuit d'ajustement est adapté à soustraire, au courant de charge du condensateur, un courant d'ajustement fonction de la valeur de la tension alternative.

Selon un mode de réalisation de la présente invention, l'intensité du courant d'ajustement est une fonction affine de la valeur de la tension alternative.

Selon un mode de réalisation de la présente invention, le circuit d'ajustement comprend au moins un transistor bipolaire recevant sur sa base une tension fonction de la valeur de la tension alternative.

Selon un mode de réalisation de la présente invention, le transistor est relié en parallèle du condensateur.

Un autre mode de réalisation de la présente invention prévoit un variateur de puissance d'une charge alimentée par une tension alternative, comprenant au moins un condensateur et un circuit de charge dudit condensateur par la tension alternative tel que décrit ci-dessus.

Selon un mode de réalisation de la présente invention, le temps de charge dudit au moins un condensateur conditionne la puissance fournie à une charge.

Selon un mode de réalisation de la présente invention, le variateur comprend un circuit de déclenchement adapté à déclencher la fermeture d'un interrupteur lorsque la tension aux bornes du condensateur dépasse un seuil.

Selon un mode de réalisation de la présente invention, l'interrupteur comprend au moins un thyristor.

Selon un mode de réalisation de la présente invention, l'interrupteur comprend un triac.

Selon un mode de réalisation de la présente invention, le circuit de charge comprend un élément résistif en série avec le condensateur.

Un autre mode de réalisation de la présente invention prévoit un procédé de charge d'un condensateur par une tension alternative, dans lequel la vitesse de charge est ajustée en fonction de la valeur de la tension alternative.

Selon un mode de réalisation de la présente invention, un courant d'ajustement, fonction de la valeur de la tension alternative, est soustrait à un courant de charge du condensateur.

Selon un mode de réalisation de la présente invention, l'intensité du courant d'ajustement est fonction de la valeur de la tension alternative.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est un schéma électrique simplifié d'un montage comprenant une charge alimentée par une tension alternative, et un mode de réalisation d'un variateur de puissance adapté à commander la puissance fournie à cette charge ;
la figure 2 est un schéma électrique d'un exemple de réalisation d'un circuit de déclenchement d'un interrupteur d'un variateur de puissance ;
la figure 3 est un schéma électrique d'un autre exemple de réalisation d'un circuit de déclenchement d'un interrupteur d'un variateur de puissance ; et
la figure 4 est un schéma électrique simplifié d'un montage comprenant une charge alimentée par une tension alternative, et un autre mode de réalisation d'un variateur de puissance adapté à commander la puissance fournie à cette charge.

### Description détaillée

De mêmes éléments ont été désignés par de mêmes références aux différentes figures. De plus, pour des raisons de clarté, seuls les éléments utiles à la compréhension de l'invention ont été représentés et seront décrits par la suite.

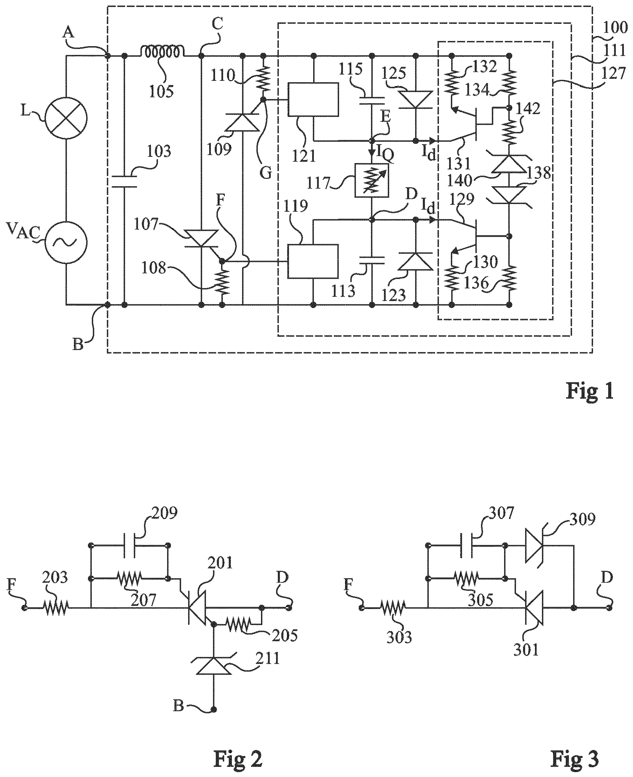

La figure 1 est un schéma électrique simplifié d'un montage comprenant une charge L alimentée par une tension alternative V_{AC}, et un exemple d'un mode de réalisation d'un variateur de puissance 100 adapté à commander la puissance fournie à la charge L. La charge L est par exemple un dispositif d'éclairage tel qu'une ampoule halogène, une lampe à diodes électroluminescentes, une lampe fluorescente compacte, ou tout autre dispositif d'éclairage susceptible d'être alimenté à partir d'une tension alternative. En variante, la charge peut être un dispositif de chauffage, de ventilation, ou tout autre dispositif susceptible d'être alimenté à partir d'une tension alternative. La tension alternative V_{AC} est par exemple la tension secteur du réseau de distribution électrique. Dans cet exemple, le variateur 100 est monté en série avec la charge L par l'intermédiaire de deux bornes de contact A et B, le tout recevant la tension alternative V_{AC}. Les bornes A et B du variateur sont connectées respectivement à une première borne de la charge L et à une première borne de fourniture de la tension alternative V_{AC}, une deuxième borne de la charge L étant connectée à une deuxième borne de fourniture de la tension alternative V_{AC}.

Le variateur 100 est un variateur double alternance, c'est-à-dire qu'il fournit de l'énergie à la charge L pendant les deux alternances, positive et négative, de la tension d'alimentation V_{AC}.

Le variateur 100 comprend un filtre LC comportant un condensateur 103 entre les bornes A et B, et une inductance 105 dont une extrémité est reliée à la borne A et dont l'autre extrémité est reliée à un noeud C du variateur. Le filtre LC a notamment pour rôle d'empêcher que des gradients de courant et/ou de tension indésirables (par exemple des pics de courant et/ou de tension) ne se propagent sur le réseau de distribution électrique. A titre d'exemple, le condensateur 103 est directement connecté aux bornes A et B, et l'inductance 105 est directement connectée à la borne A et au noeud C.

Le variateur 100 comprend un premier thyristor 107 entre le noeud C et la borne B, l'anode du thyristor 107 étant côté noeud C, et, en antiparallèle du thyristor 107, un deuxième thyristor 109. Dans cet exemple, les thyristors 107 et 109 sont des thyristors à gâchette de cathode. Dans un mode de réalisation préféré, l'anode du thyristor 107 et la cathode du thyristor 109 sont directement connectées au noeud C, et la cathode du thyristor 107 et l'anode du thyristor 109 sont directement connectées à la borne B. Une résistance 108 relie la gâchette de cathode F du thyristor 107 à la borne B, et une résistance 110 relie la gâchette de cathode G du thyristor 109 au noeud C. Dans un mode de réalisation préféré, les résistances 108 et 110 sont directement connectées respectivement au noeud F et à la borne B, et aux noeuds G et C.

Le variateur 100 comprend en outre un circuit 111 de commande des thyristors 107 et 109. Le circuit 111 comprend un premier condensateur 113 entre la borne B et un noeud intermédiaire D du circuit 111, et un deuxième condensateur 115 entre le noeud C et un noeud intermédiaire E du circuit 111. Un élément résistif 117, de valeur variable, comportant par exemple un potentiomètre, relie le noeud D au noeud E. Dans un mode de réalisation préféré, le condensateur 113 est directement connecté au noeud D et à la borne B, le condensateur 115 est directement connecté aux noeuds E et C, et l'élément résistif 117 est directement connecté aux noeuds E et D. Le circuit 111 comprend des éléments de réinitialisation pour décharger les condensateurs 113 ou 115 au début de chaque nouvelle alternance positive ou négative de la tension alternative. Les éléments de réinitialisation comprennent par exemple une diode 123 entre la borne B et le noeud D, l'anode de la diode 123 étant côté borne B, et une diode 125 entre le noeud C et le noeud E, l'anode de la diode 125 étant côté noeud C. Dans un mode de réalisation préféré, l'anode et la cathode de la diode 123 sont directement connectées respectivement à la borne B et au noeud D, et l'anode et la cathode de la diode 125 sont directement connectées respectivement au noeud C et au noeud E. Le circuit 111 comprend de plus un circuit 119 adapté à déclencher (rendre passant) le thyristor 107 lorsque la tension aux bornes du condensateur 113 dépasse un seuil pendant une alternance positive de la tension V_{AC}, et un circuit 121 adapté à déclencher (rendre passant) le thyristor 109 lorsque la tension aux bornes du condensateur 115 dépasse un seuil pendant une alternance négative de la tension V_{AC}. Dans cet exemple, le circuit 119 est relié, et de préférence directement connecté, aux noeuds D et F et à la borne B, et le circuit 121 est relié, et de préférence directement connecté, aux noeuds E, C et G.

Au début d'une alternance positive de la tension V_{AC}, les thyristors 107 et 109 sont maintenus bloqués. Il circule dans le variateur un courant I_{Q} passant par la diode 125, polarisée en direct, et par l'élément résistif 117. Le condensateur 113 se charge sous l'effet de ce courant. Lorsque la tension aux bornes du condensateur 113 dépasse un seuil, le thyristor 107 est rendu passant. Pour cela, le circuit de déclenchement 119 applique une tension aux bornes de la résistance 108, c'est-à-dire entre le noeud F et la borne B, de manière à appliquer un courant d'intensité supérieure à un seuil de déclenchement entre la gâchette de cathode et la cathode du thyristor 107. Une fois déclenché, le thyristor 107 reste passant jusqu'à ce que le courant le traversant s'annule, par exemple jusqu'à la fin de l'alternance.

La séquence susmentionnée est réitérée à chaque alternance positive ou négative de la tension alternative V_{AC}, la seule différence, pour les alternances négatives, étant qu'en début d'alternance, le courant I_{Q} passe par la diode 123, polarisée en direct, et charge le condensateur 115. Lorsque la tension aux bornes du condensateur 115 dépasse un seuil, le thyristor 109 est rendu passant par le circuit de déclenchement 121.

En jouant sur la valeur de l'élément résistif variable 117, on peut faire varier la vitesse de charge des condensateurs 113 et 115, et donc jouer sur les instants de déclenchement des thyristors 107 et 109. Ceci permet de réguler la puissance fournie à la charge L. En particulier, diminuer la résistance 117 revient à avancer l'instant de déclenchement des thyristors 107 et 109, et donc à augmenter la puissance fournie à la charge, et augmenter la résistance 117 revient à retarder l'instant de déclenchement des thyristors 107 et 109, et donc à diminuer la puissance fournie à la charge.

Selon un aspect des modes de réalisation décrits, le circuit de commande 111 du variateur 100 comprend, en plus des éléments déjà décrits, un circuit de dérivation 127 adapté à soustraire, au courant de charge I_{Q} des condensateurs 113 et 115, un courant d'ajustement I_{d}, fonction de la valeur de la tension alternative V_{AC}.

Dans cet exemple, le circuit de dérivation 127 comprend deux transistors bipolaires NPN 129 et 131. Le collecteur du transistor 129 est relié, et de préférence directement connecté, au noeud D, et son émetteur est relié à la borne B par l'intermédiaire d'une résistance d'émetteur 130. Le collecteur du transistor 131 est relié, et de préférence directement connecté, au noeud E, et son émetteur est relié au noeud C par l'intermédiaire d'une résistance d'émetteur 132. Le circuit 127 comprend en outre une résistance 134 reliant la base du transistor 131 au noeud C, et une résistance 136 reliant la base du transistor 129 à la borne B. Dans cet exemple, le circuit 127 comprend deux diodes Zener 138 et 140 en antisérie entre la base du transistor 129 et la base du transistor 131, la cathode de la diode 138 étant côté base du transistor 129, et la cathode de la diode 140 étant côté base du transistor 131. Dans cet exemple, la cathode de la diode 138 est directement connectée à la base du transistor 129, l'anode de la diode 138 est directement connectée à l'anode de la diode 140, et une résistance 142 relie la cathode de la diode 140 à la base du transistor 131.

Au début d'une alternance positive de la tension V_{AC} et de la phase de charge du condensateur 113, la diode Zener 140 est bloquée. La tension base-émetteur du transistor 129 est alors sensiblement nulle, et le transistor 129 est non passant. L'intégralité du courant I_{Q} circulant dans la diode 125 et l'élément résistif 117 vient charger le condensateur 113. Lorsque la tension V_{AC} atteint la tension d'avalanche de la diode Zener 140, cette dernière devient passante. Si l'on désigne par V_{Z140} la tension d'avalanche de la diode 140, et par R₁₃₄, R₁₃₆ et R₁₄₂ les valeurs respectives des résistances 134, 136 et 142, une tension sensiblement égale à (V_{AC} - V_{Z140}) x R₁₃₆ / (R₁₃₆ + R₁₃₄ + R₁₄₂) est alors appliquée entre la base du transistor 129 et la borne B, ce qui entraîne la mise en conduction du transistor 129. Une partie I_{d} du courant I_{Q} est alors dérivée par le transistor 129, et ne contribue plus à la charge du condensateur 113, ce qui entraîne une diminution de la vitesse de charge du condensateur 113 par rapport à un variateur ne comportant pas le circuit de dérivation 127. Le circuit 111 est dimensionné de sorte que le transistor 129 soit dans sa zone de fonctionnement linéaire. Un courant de base sensiblement proportionnel à la tension V_{AC} - V_{Z140} circulant dans la jonction base-émetteur du transistor 129, le courant I_{d} dérivé par le transistor est également sensiblement proportionnel à la tension V_{AC} - V_{Z140}, et donc fonction affine de la valeur de la tension V_{AC}. Le courant de charge du condensateur 113 est alors égal à I_{Q} - I_{d}. Lorsque la tension aux bornes du condensateur 113 dépasse le seuil de déclenchement fixé par le circuit 119, le thyristor 107 est rendu passant.

De façon similaire, pendant les alternances négatives, lorsque la tension V_{AC} atteint la tension d'avalanche V_{Z138} de la diode Zener 138, un courant I_{d} proportionnel à la tension V_{AC} - V_{Z138} est soustrait au courant de charge I_{Q} du condensateur 115, et évacué vers la borne A par l'intermédiaire du transistor 131 et de l'inductance 105.

En d'autres termes, le circuit de dérivation 127 ajuste la vitesse de charge des condensateurs 113 et 115 en fonction de la valeur de la tension alternative V_{AC}, ou décharge partiellement les condensateurs 113 et 115 en fonction de la valeur de la tension alternative V_{AC}. Plus particulièrement, dans cet exemple, lorsque la tension V_{AC} dépasse le seuil d'avalanche des diodes 138 et 140, le circuit 127 réduit la vitesse de charge des condensateurs 113 et 115, cette réduction étant d'autant plus importante que la valeur de la tension V_{AC} est élevée.

Un avantage du mode de réalisation de la figure 1 est que le circuit 127 permet de minimiser l'influence des fluctuations d'amplitude de la tension V_{AC} sur la vitesse de charge des condensateurs 113 et 115, et donc sur la puissance fournie à la charge.

Dans l'exemple de la figure 1, la prévision des diodes Zener 138 et 140 permet d'éviter qu'un courant I_{d} ne soit dérivé du courant de charge des condensateurs 113 et 115 dès le début d'une alternance positive ou négative de la tension V_{AC}. Ceci permet de minimiser la consommation du variateur lorsque l'on sait à l'avance que, quel que soit le réglage du potentiomètre 117, les thyristors 107 et 109 ne sont déclenchés que vers la fin des alternances de la tension V_{AC} (par exemple lorsque la charge est une charge à faible consommation d'énergie). Les diodes 138 et 140 sont toutefois facultatives. En l'absence des diodes 138 et 140, un courant Id, proportionnel à la valeur de la tension V_{AC}, est dérivé du courant de charge des condensateurs 113 et 115 dès le début des alternances positives et négatives de la tension V_{AC}.

La figure 2 est un schéma électrique d'un exemple de réalisation du circuit 119 de déclenchement du thyristor 107 du variateur 100 de la figure 1, pendant des alternances positives de la tension V_{AC}. A partir du schéma de la figure 2, l'homme du métier saura réaliser un circuit similaire pour le déclenchement du thyristor 109 pendant les alternances négatives de la tension V_{AC} (circuit 121 du variateur 100 de la figure 1). Dans cet exemple, le circuit de déclenchement comprend un thyristor 201 dont l'anode est reliée, et de préférence directement connectée, au noeud D, et dont la cathode est reliée au noeud F par l'intermédiaire d'une résistance 203. Une résistance 205 de gâchette d'anode est connectée entre la gâchette d'anode et l'anode du thyristor 201, une résistance 207 de gâchette de cathode est connectée entre la gâchette de cathode et la cathode du thyristor 201, et un condensateur 209 est connecté en parallèle de la résistance 207, entre la gâchette de cathode et la cathode du thyristor 201. Le circuit de déclenchement de la figure 2 comprend en outre une diode Zener 211 connectée entre la borne B et la gâchette d'anode du thyristor 201, l'anode de la diode 211 étant côté borne B. Le seuil d'avalanche de la diode Zener 211 conditionne le seuil de tension aux bornes du condensateur 113 auquel le thyristor 107 est déclenché.

Lorsque la tension aux bornes du condensateur 113 dépasse un seuil, la diode Zener 211 devient conductrice par effet d'avalanche, et il circule un courant allant de l'anode vers la gâchette d'anode de la diode 211. Ce courant de déclenchement provoque la fermeture du thyristor 201. Une fois le thyristor 201 rendu passant, il circule un courant entre la gâchette de cathode et la cathode du thyristor 107, ce qui provoque la fermeture du thyristor 107. La résistance 207 et le condensateur 209 permettent d'améliorer l'immunité électromagnétique du thyristor 201.

La figure 3 est un schéma électrique d'un autre exemple de réalisation du circuit 119 de déclenchement du thyristor 107 du variateur 100 de la figure 1, pendant les alternances positives de la tension V_{AC}. A partir du schéma de la figure 3, l'homme du métier saura réaliser un circuit similaire pour le déclenchement du thyristor 109 pendant les alternances négatives de la tension V_{AC} (circuit 121 du variateur 100 de la figure 1). Dans cet exemple, le circuit de déclenchement comprend un thyristor 301 dont l'anode est reliée, et de préférence directement connectée, au noeud D, et dont la cathode est reliée au noeud F par l'intermédiaire d'une résistance 303. Une résistance 305 de gâchette de cathode est connectée entre la gâchette de cathode et la cathode du thyristor 301, et un condensateur 307 est connecté en parallèle de la résistance 305, entre la gâchette de cathode et la cathode du thyristor 301. Le circuit de déclenchement de la figure 2 comprend en outre une diode Zener 309 connectée entre la gâchette de cathode et le noeud D, la cathode de la diode 309 étant côté noeud D. Le seuil d'avalanche de la diode Zener 309 conditionne le seuil de tension aux bornes du condensateur 113 auquel le thyristor 107 est déclenché. Dans l'exemple de la figure 3, la borne B n'est pas connectée au circuit de déclenchement 119.

Lorsque la tension aux bornes du condensateur 113 dépasse un seuil, la diode Zener 309 devient conductrice par effet d'avalanche, et il circule un courant allant de la gâchette de cathode vers la cathode du thyristor 301. Ce courant de déclenchement provoque la fermeture du thyristor 301. Une fois le thyristor 201 rendu passant, il circule un courant entre la gâchette de cathode et la cathode du thyristor 107, ce qui provoque la fermeture du thyristor 107. La résistance 305 et le condensateur 307 permettent d'améliorer l'immunité électromagnétique du thyristor 301.

Le circuit de déclenchement de la figure 3 présente l'avantage, par rapport au circuit de la figure 2, de permettre un contrôle plus précis des thyristors 107 et 109. Cet avantage résulte notamment du fait que le circuit de la figure 3 utilise un thyristor à gâchette de cathode, plus sensible qu'un thyristor à gâchette d'anode. De plus, dans un thyristor à gâchette d'anode le passage de l'état passant à l'état bloqué intervient pour une valeur de courant circulant dans le thyristor plus faible que dans un thyristor à gâchette de cathode, ce qui facilite le contrôle des thyristors 107 et 109.

Dans un exemple de réalisation du variateur 100 de la figure 1, les circuits de déclenchement 119 et 121 sont réalisés selon l'exemple de la figure 3, et les valeurs des divers composants du variateur 100 sont comme suit : condensateur 103 : 100 nanofarads, inductance 105 : 29 micro-henrys, résistances 108 et 110 : 10 kilo-ohms, résistances 303 : 50 kilo-ohms, résistances 305 : 20 kilo-ohms, condensateurs 307 : 10 nanofarads, condensateurs 113 et 115 : 1 microfarad, résistances 130 et 132 : 680 ohms, résistances 134 et 136 : 4,3 kilo-ohms, résistance 142 : 150 kilo-ohms. Les thyristors 107 et 109 sont par exemple les composants commercialisés sous la référence TS820-600. Les diodes Zener 309 sont par exemple les composants commercialisés sous la référence BZX55C15, présentant une tension d'avalanche de l'ordre de 15 volts. Les diodes 123 et 125 sont par exemple les composants commercialisés sous la référence 1N4148. Les transistors bipolaires 129 et 131 sont par exemple les composants commercialisés sous la référence 2N2222. Les diodes Zener 138 et 140 sont par exemple les composants commercialisés sous la référence BZX55C68, présentant une tension d'avalanche de l'ordre de 68 volts. Chaque thyristor 301 (ou 201 dans le cas du circuit de la figure 2) peut être réalisé au moyen de deux transistors bipolaires montés en thyristor, par exemple un transistor NPN commercialisé sous la référence 2N2222 et un transistor PNP commercialisé sous la référence 2N2907. L'élément résistif variable 117 comprend par exemple un potentiomètre de 220 kilo-ohms en série avec une première résistance de 1 kilo-ohms entre les noeuds E et D, et, en parallèle du potentiomètre une seconde résistance de 82 kilo-ohms, le curseur du potentiomètre étant relié au noeud commun au potentiomètre et aux première et seconde résistances.

Les modes de réalisation décrits ne se limitent bien entendu pas à cet exemple particulier.

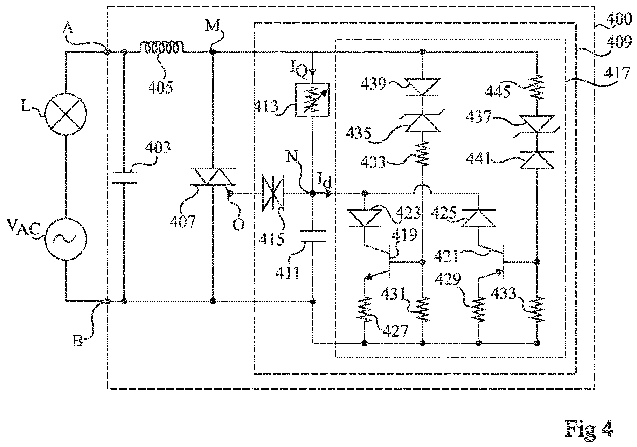

La figure 4 est un schéma électrique simplifié d'un montage comprenant une charge L alimentée par une tension alternative V_{AC}, et un exemple d'un autre mode de réalisation d'un variateur de puissance 400 adapté à commander la puissance fournie à la charge L. Comme dans l'exemple de la figure 1, le variateur 400 de la figure 4 est monté en série avec la charge L par l'intermédiaire de deux bornes de contact A et B, le tout recevant la tension alternative V_{AC}. De plus, comme dans l'exemple de la figure 1, le variateur 400 est un variateur double alternance.

Le variateur 400 comprend un filtre LC comportant un condensateur 403 entre les bornes A et B, et une inductance 405 dont une extrémité est reliée à la borne A et dont l'autre extrémité est reliée à un noeud M du variateur. Le variateur 400 diffère du variateur 100 de la figure 1 en ce que dans le variateur 400, l'interrupteur utilisé pour commander la puissance fournie à la charge est un triac 407 (remplaçant les thyristors 107 et 109 du variateur 100). Le triac 407 est connecté entre le noeud M et la borne B. Le variateur 400 comprend un circuit 409 de commande du triac 407. Le circuit 409 comprend un condensateur 411 entre la borne B et un noeud intermédiaire N du circuit 409. Un élément résistif 413 de valeur variable, comportant par exemple un potentiomètre, relie le noeud N au noeud M. Le circuit 409 comprend de plus un diac 415 connecté entre le noeud N et une gâchette 0 de commande du triac 407.

Au début d'une alternance positive de la tension V_{AC}, le triac 407 est maintenu bloqué. Il circule dans le variateur un courant I_{Q} passant par l'élément résistif 413 et venant charger le condensateur 411. Lorsque la tension aux bornes du condensateur 411 dépasse le seuil de déclenchement du diac 415, ce dernier entre en conduction et il circule un courant entre la gâchette 0 du triac 407 et la borne B. Ce courant de gâchette provoque la mise en conduction du triac 407. Une fois déclenché, le triac 407 reste passant jusqu'à la fin de l'alternance.

La séquence susmentionnée est réitérée à chaque alternance positive ou négative de la tension alternative V_{AC}.

Selon un aspect du mode de réalisation décrit, le circuit de commande 409 du triac comprend en outre, en plus des éléments déjà décrits, un circuit de dérivation 417, ou de décharge partielle du condensateur 411 en fonction de la valeur de la tension alternative V_{AC}. Dans cet exemple, le circuit 417 est adapté à soustraire, au courant de charge I_{Q} du condensateur 411, un courant d'ajustement I_{d}, fonction de la valeur de la tension alternative V_{AC}.

Dans cet exemple, le circuit de dérivation 127 comprend un transistor bipolaire NPN 419 et un transistor bipolaire PNP 421. Une diode 423 est connectée entre le noeud N et le collecteur du transistor 419, l'anode de la diode 423 étant côté noeud N, et une diode 425 est connectée entre le collecteur du transistor 421 et le noeud N, la cathode de la diode 425 étant côté noeud N. L'émetteur du transistor 419 est relié à la borne B par l'intermédiaire d'une résistance d'émetteur 427, et l'émetteur du transistor 421 est relié à la borne B par l'intermédiaire d'une résistance d'émetteur 429. Le circuit 417 comprend en outre une résistance 431 reliant la base du transistor 419 à la borne B, et une résistance 433 reliant la base du transistor 421 à la borne B. Dans cet exemple, le circuit 417 comprend de plus deux diodes Zener 435 et 437, respectivement entre la base du transistor 419 et le noeud M, et entre la base du transistor 421 et le noeud M, la cathode de la diode 435 étant côté noeud M et la cathode de la diode 437 étant côté base du transistor 421. Dans cet exemple, une diode 439 est connectée entre le noeud M et la cathode de la diode Zener 435, l'anode de la diode 439 étant côté noeud M, et une diode 441 est connectée entre la base du transistor 421 et la cathode de la diode Zener 437, l'anode de la diode 441 étant côté base du transistor 421. De plus, dans l'exemple représenté, une résistance 443 est connectée entre la base du transistor 419 et l'anode de la diode Zener 435, et une résistance 445 est connectée entre le noeud M et l'anode de la diode Zener 437.

Au début d'une alternance positive de la tension V_{AC} et de la phase de charge du condensateur 411, la diode Zener 435 est bloquée. La tension base-émetteur du transistor 419 est alors sensiblement nulle, et le transistor 419 est non passant. L'intégralité du courant I_{Q} circulant dans l'élément résistif 413 vient donc charger le condensateur 411. Lorsque la tension V_{AC} atteint la tension d'avalanche de la diode Zener 435, cette dernière devient passante. Une tension sensiblement proportionnelle à la tension V_{AC} moins la tension d'avalanche de la diode 435 est alors appliquée entre la base du transistor 419 et la borne B, ce qui entraîne la mise en conduction du transistor 419. Une partie I_{d} du courant I_{Q} est alors dérivée par le transistor 419, et ne contribue plus à la charge du condensateur 411, ce qui entraîne une diminution de la vitesse de charge du condensateur 411 par rapport à un variateur qui ne comporterait pas le circuit de dérivation 417. Dans cet exemple, le courant I_{d} dérivé par le transistor 419 est proportionnel à la valeur de la tension V_{AC} moins la tension d'avalanche de la diode 435. Lorsque la tension aux bornes du condensateur 411 dépasse le seuil de déclenchement fixé par le diac 415, le triac 407 est rendu passant.

De façon similaire, pendant les alternances négatives, lorsque la tension V_{AC} dépasse la tension d'avalanche de la diode Zener 437, un courant I_{d}, proportionnel à la tension V_{AC} moins la tension d'avalanche de la diode Zener 437, est soustrait au courant de charge I_{Q} du condensateur 411, et évacué par l'intermédiaire du transistor 421.

On notera que dans l'exemple de la figure 4, les diodes 423, 425, 439 et 441 sont optionnelles, et peuvent être supprimées si les transistors 419 et 421 sont capables de tenir une tension négative entre leur collecteur et leur émetteur d'une part, et entre leur émetteur et leur base d'autre part.

Des modes de réalisation particuliers de la présente invention ont été décrits. Diverses variantes et modifications apparaîtront à l'homme de l'art.

En particulier, on a décrit ci-dessus des modes de réalisation d'un circuit de charge d'un condensateur par une tension alternative, dans lesquels la vitesse de charge du condensateur est ajustée en fonction de la valeur de la tension alternative. Plus particulièrement, on a décrit des exemples de réalisation dans lesquels le circuit de charge du condensateur comprend un circuit de dérivation adapté à soustraire, au courant de charge du condensateur, un courant fonction de la valeur de la tension alternative, ou à décharger partiellement le condensateur en fonction de la valeur de la tension alternative. Bien que l'invention ait été décrite dans le cadre d'une utilisation particulièrement avantageuse dans des circuits de commande d'interrupteurs dans des variateurs de puissance, elle ne se limite pas à cette utilisation particulière. L'homme du métier saura adapter les modes de réalisation décrits à tout circuit de charge d'un condensateur par une tension alternative, dans lequel on souhaite minimiser l'influence des fluctuations d'amplitude de la tension alternative sur le temps de charge du condensateur.

De plus, l'invention ne se restreint pas aux exemples de circuits de dérivation ou décharge décrits ci-dessus. A partir de l'enseignement décrit ci-dessus, l'homme du métier saura réaliser d'autres circuits de charge d'un condensateur par une tension alternative, adaptés à ajuster la vitesse de charge du condensateur en fonction de la valeur de la tension alternative. A titre d'exemple, on a décrit ci-dessus des circuits de dérivation permettant de soustraire au courant de charge du condensateur un courant d'ajustement qui est une fonction affine ou une fonction linéaire de la valeur de la tension alternative. L'invention ne se limite pas aux fonctions de ce type. De plus, dans les exemples décrits, le courant d'ajustement est dérivé au moyen de transistors bipolaires. L'invention ne se limite pas à ce cas particulier. D'autres types de composants de dérivation pourront être utilisés, par exemple des transistors MOS.

Par ailleurs, dans le cas d'une utilisation dans un variateur de puissance pour une charge alimentée par une tension alternative, l'invention de se limite pas aux exemples de schémas de variateurs représentés et décrits. En particulier, l'invention ne se limite pas au cas où le variateur comporte un filtre LC de protection contre les perturbations parasites. De plus, l'invention ne se limite pas aux variateurs utilisant des interrupteurs de type thyristors ou des triacs. L'homme de l'art saura adapter les modes de réalisation décrits à des variateurs utilisant d'autres types d'interrupteurs. L'invention ne se limite pas non plus aux exemples de circuits de déclenchement de l'interrupteur décrits ci-dessus. En outre, l'homme du métier saura adapter les modes de réalisation décrits à des variateurs mono-alternance.

## Revendications

1. Variateur de puissance (100 ; 400) d'une charge (L) alimentée par une tension alternative (V_{AC}), comprenant :
un interrupteur (107, 109 ; 407) destiné à être relié en série avec la charge (L), le tout recevant la tension alternative (V_{AC}) d'alimentation ; et
un circuit de commande (111 ; 409) de l'interrupteur comportant : un condensateur (113, 115 ; 411) ; un circuit de charge dudit condensateur (113, 115 ; 411) par la tension alternative (V_{AC}), comportant un circuit (127 ; 417) d'ajustement de la vitesse de charge du condensateur en fonction de la valeur de la tension alternative (V_{AC}) ; et un circuit de déclenchement (119, 121 ; 415) adapté à rendre passant l'interrupteur (107, 109 ; 407) lorsque la tension aux bornes du condensateur (113, 115) dépasse un seuil,
**caractérisé en ce que** le circuit d'ajustement (127 ; 417) comprend au moins un transistor bipolaire (129, 131 ; 419, 421) recevant sur sa base une tension fonction de la valeur de la tension alternative (V_{AC}), ce transistor étant adapté à soustraire, à un courant de charge (I_{Q}) du condensateur, un courant d'ajustement (I_{d}) proportionnel à la valeur de la tension reçue sur sa base.

2. Variateur de puissance (100 ; 400) selon la revendication 1, dans lequel l'intensité du courant d'ajustement (I_{d}) est une fonction affine de la valeur de la tension alternative (V_{AC}).

3. Variateur de puissance (100 ; 400) selon la revendication 1 ou 2, dans lequel ledit transistor (129, 131 ; 419, 421) est relié en parallèle du condensateur (113, 115 ; 411).

4. Variateur de puissance (100 ; 400) selon l'une quelconque des revendications 1 à 3, dans lequel le temps de charge dudit au moins un condensateur (113, 115 ; 411) conditionne la puissance fournie à la charge (L).

5. Variateur de puissance (100) selon l'une quelconque des revendications 1 à 3, dans lequel ledit interrupteur comprend au moins un thyristor (107, 109).

6. Variateur de puissance (400) selon l'une quelconque des revendications 1 à 3, dans lequel ledit interrupteur comprend un triac (407).

7. Variateur de puissance (100 ; 400) selon l'une quelconque des revendications 1 à 6, dans lequel le circuit de charge comprend un élément résistif (117 ; 413) en série avec ledit condensateur (113, 115 ; 411).

## Patentansprüche

1. Leistungsdimmer (100; 400) für eine Last (L), die mit einer Wechselspannung (V_{AC}) betrieben wird, der folgendes aufweist:
einen Schalter (107, 109; 407), der dazu bestimmt ist, in Reihe mit der Last (L) gekoppelt zu werden, wobei die Anordnung die Wechselspannung (V_{AC}) empfängt; und
eine Schaltung (111; 409) zum Steuern des Schalters, die folgendes aufweist: einen Kondensator (113, 115; 411); eine Schaltung zum Laden des Kondensators (113, 115; 411) mit der Wechselspannung (V_{AC}), die eine Schaltung (127; 417) zum Einstellen der Kondensatorladegeschwindigkeit gemäß dem Wert der Wechselspannung (V_{AC}) aufweist; und eine Trigger-bzw. Auslöseschaltung (119, 121; 415), die geeignet ist, den Schalter (107, 109; 407) einzuschalten, wenn die Spannung über dem Kondensator (113, 115) einen Schwellenwert überschreitet,
**dadurch gekennzeichnet, dass** die Einstellschaltung (127; 417) wenigstens einen Bipolartransistor (129, 131; 419, 421) aufweist, der an seiner Basis eine Spannung empfängt, die eine Funktion des Wertes der Wechselspannung (V_{AC}) ist, wobei dieser Transistor geeignet ist, von einem Ladestrom (I_{Q}) des Kondensators einen Einstellstrom (I_{d}) proportional zum Wert der an seiner Basis empfangenen Spannung abzuziehen.

2. Leistungsdimmer (100; 400) nach Anspruch 1, wobei die Intensität des Einstellstroms (I_{d}) eine lineare Funktion des Wertes der Wechselspannung (V_{AC}) ist.

3. Leistungsdimmer (100, 400) nach Anspruch 1 oder 2, wobei der Transistor (129, 131; 419, 421) parallel zum Kondensator (113, 115; 411) gekoppelt ist.

4. Leistungsdimmer (100; 400) nach einem der Ansprüche 1 bis 3, wobei die Ladegeschwindigkeit des wenigstens einen Kondensators (113, 115; 411) die der Last (L) zugeführte Leistung koordiniert.

5. Leistungsdimmer (100) nach einem der Ansprüche 1 bis 3, wobei der Schalter wenigstens einen Thyristor (107, 109) aufweist.

6. Leistungsdimmer (400) nach einem der Ansprüche 1 bis 3, wobei der Schalter einen Triac (407) aufweist.

7. Leistungsdimmer (100; 400) nach einem der Ansprüche 1 bis 6, wobei die Ladeschaltung ein Widerstandselement (117; 413) in Reihe mit dem Kondensator (113, 115; 411) aufweist.

## Claims

1. A power dimmer (100; 400) for a load (L) powered with an alternating voltage (V_{AC}), comprising:
a switch (107, 109; 407) intended to be coupled in series with the load (L), the assembly receiving the alternating voltage (V_{AC}); and
a circuit (111; 409) for controlling the switch, comprising: a capacitor (113, 115; 411); a circuit for charging said capacitor (113, 115; 411) with the alternating voltage (V_{AC}), comprising a circuit (127; 417) for adjusting the capacitor charge speed according to the value of the alternating voltage (V_{AC}); and a triggering circuit (119, 121; 415) capable of turning-on the switch (107, 109; 407) when the voltage across the capacitor (113, 115) exceeds a threshold,
**characterized in that** the adjustment circuit (127; 417) comprises at least one bipolar transistor (129, 131; 419, 421) receiving on its base a voltage which is a function of the value of the alternating voltage (V_{AC}), this transistor being capable of subtracting, to a charging current (I_{Q}) of the capacitor, an adjustment current (I_{d}) proportional to the value of the voltage received on its base.

2. The power dimmer (100; 400) of claim 1, wherein the intensity of the adjustment current (I_{d}) is a linear function of the value of the alternating voltage (V_{AC}).

3. The power dimmer (100, 400) of claim 1 or 2, wherein said transistor (129, 131; 419, 421) is coupled in parallel with the capacitor (113, 115; 411).

4. The power dimmer (100; 400) of any of claims 1 to 3, wherein the charge speed of said at least one capacitor (113, 115; 411) conditions the power supplied to the load (L).

5. The power dimmer (100) of any of claims 1 to 3, wherein said switch comprises at least one thyristor (107, 109).

6. The power dimmer (400) of any of claims 1 to 3, wherein said switch comprises a triac (407).

7. The power dimmer (100; 400) of any of claims 1 to 6, wherein the charge circuit comprises a resistive element (117; 413) in series with said capacitor (113, 115; 411).
